Europäisches Patentamt

European Patent Office

Office européen des brevets

(19)

(11)  EP 0 691 537 A1

(12)  **EUROPÄISCHE PATENTANMELDUNG**

(43) Veröffentlichungstag:
   10.01.1996  Patentblatt 1996/02

(51) Int. Cl.$^6$: **G01N 23/00**, G01N 23/12

(21) Anmeldenummer: 95110383.7

(22) Anmeldetag: 04.07.1995

(84) Benannte Vertragsstaaten:
   **BE CH DE FR GB IT LI LU NL SE**

(30) Priorität: **07.07.1994 DE 4423665**

(71) Anmelder: **Forschungszentrum Rossendorf e.V.
   D-01474 Rossendorf (DE)**

(72) Erfinder:
   • **Prasser, Horst-Michael
     D-01097 Dresden (DE)**
   • **Enghardt, Wolfgang
     D-01454 Radeberg (DE)**
   • **Hensel, Frank
     D-01099 Dresden (DE)**

(54)  **Verfahren zur Messung der integralen Massenfeuchte in Zweiphasenströmungen**

(57)   Die Erfindung betrifft ein Verfahren zur Messung der integralen Massenfeuchte in Zweiphasenströmungen (Wasserdampf - Tröpfchen). Das Verfahren ermöglicht eine starke Erweiterung des Meßbereiches in Richtung kleiner Massenstromanteile der flüssigen Phase, die bisherige Meßverfahren nicht erbringen können. Das Verfahren beruht auf der Abhängigkeit der Reichweite von Positronen, von ihrer Entstehung bis zur Annihilation, von der Dichte des umgebenden Mediums. Von einer Positronenquelle werden dazu Positronen in die zu untersuchende Strömung emittiert, die entsprechend ihrer Energie eine bestimmte Lebensdauer und Reichweite im untersuchten Medium aufweisen. Durch eine Messung der Reichweitenverteilung kann auf die mittlere Dichte des Mediums und damit dessen Massenfeuchte geschlossen werden.

Fig. 1

EP 0 691 537 A1

Printed by Rank Xerox (UK) Business Services
2.9.2/3.4

**Beschreibung**

Aus der Literatur ist eine Reihe von Arbeiten, die sich mit der Bestimmung von Parametern von Zweiphasenströmungen unter Druck stehenden Wassers beschäftigen bekannt. Eine Übersicht dazu gibt [ F. Mayinger, Strömung und Wärmeübergang in Gas-Flüssigkeits-Gemischen, Springer Verlag Wien 1982; S 220 ff., ISBN 3-211-81668-2 ]. Insbesondere in der Kernenergetik ist die Bestimmung der Anteile der flüssigen und gasförmigen Phase am Volumen- oder Massenstrom interessant.

Bei den bisher bekannten Verfahren handelt es sich zum großen Teil um Verfahren mit lokal arbeitenden Sonden (Messung von Leitfähigkeit oder Brechzahl in der Umgebung des Mediums) oder um Verfahren, die anhand der Absorption von Strahlung sowie durch Reflexionsvorgänge an Phasengrenzflächen im betrachteten Medium eine Bestimmung der mittleren Mediendichte vornehmen. Die Dichtebestimmung mit $\gamma$-Strahlung ($\gamma$-Densitometrie) [ A.V. Smith, Transient Density Measurments in Two-Phase Flow Using X-Rays; J. Brit. Nucl. Soc. 10, 99-106 ] ist heute Stand der Technik.

Die meisten dieser Verfahren versagen jedoch prinzipbedingt bei Kleinen Massenstromanteilen der flüssigen Phase. So ist bei herkömmlicher $\gamma$-Dichtemessung eine Abnahme der Empfindlichkeit auf Dichteänderungen in der Strömung zu verzeichnen, wenn man in Bereiche Kleiner Massenstromanteile der flüssigen Phase gelangt [ F. Mayinger,a.a.O. ]. Bei Kleinen Dichten der Zweiphasenströmung, die sich im Größenordnungsbereich der Dichte des Dampfes bewegen, gerät die Größenordnung der resultierenden Dichteschwankungen in die Nähe der Größenordnung der Intensitätsschwankungen, die durch die statistische Arbeitsweise der Strahlungsquelle bedingt sind (Röntgenröhre oder $\gamma$-Strahler). Somit geht der Vorteil der $\gamma$-Densitometrie, neben einer berührungslosen Messung auch bei größeren Rohrdurchmessern und Wandstärken einsetzbar zu sein, verloren.

Aufgabe der Erfindung ist es, ein Verfahren zur Bestimmung der Massenfeuchte in Zweiphasenströmungen mit einem geringen Massenstromanteil der flüssigen Phase (unterhalb 30%) zu schaffen.

Erfindungsgemäß wird diese Aufgabe mit dem in den Patentansprüchen dargestellten Verfahren dadurch gelöst, daß Positronen in die Strömung emittiert werden und die bei der Annihilation der in die Strömung emittierten Positronen entstehende $\gamma$-Strahlung in Abhängigkeit von der Entfernung des Annihilationsortes von der Positronenquelle gemessen wird, und daß die Reichweitenverteilung der Positronen als Maß der Massenfeuchte verwendet wird.

Das Verfahren vereint den Vorteil der unmittelbar im untersuchten Medium stattfindenden Erzeugung des Meßsignals mit einer guten Durchdringung von Rohrwänden durch die $\gamma$-Annihilationsquanten der Energie $E_\gamma = 511$ keV. Die eigentliche Meßgröße, die Reichweite der Positronen in der Zweiphasenströmung, ändert sich im angegebenen Dichtebereich sehr empfindlich. Hierdurch ist es möglich, den Meßbereich gegenüber dem Stand der Technik in Richtung Kleiner Massenstromanteile der flüssigen Phase zu erweitern.

Das Verfahren beruht auf den grundlegenden physikalischen Vorgängen, die bei der Positronenannihilation ablaufen. Positronen sind Elementarteilchen der Antimaterie; bei solchen Teilchen kommt es beim Zusammenstoß mit einem korrespondierenden Materieteilchen zur Annihilation beider Teilchen. Das zum Positron korrespondierende Materieteilchen ist das in der Hülle eines jeden Atoms vorhandene Elektron. Die beiden Teilchen innewohnende Energie, einschließlich deren Ruheenergie (Masse) wird in Form von $\gamma$-Strahlung abgestrahlt. Aus Gründen fundamentaler Naturgesetze gibt es dabei Besonderheiten: So führt die Impulserhaltung zur Abstrahlung von mindestens 2 $\gamma$-Quanten, deren Energie vom Energiesatz (Energieerhaltung) bestimmt ist. Für den Fall einer 2-Quanten-Annihilation besitzen beide Quanten die gleiche Energie, sie werden, bezogen auf das Massenmittelpunktsystem des Prozesses, in genau entgegengesetzter Richtung abgestrahlt. Somit ist es für fast alle Annihilationsereignisse möglich, den Ort des Ereignisses entlang einer Gerade im Raum (Eventline) einzugrenzen.

Die Positronen werden vor der Annihilation auf Energien der Größenordnung der thermischen Energie der benachbarten Materie abgebremst. Diese Abbremsung auf thermische Energien noch vor der Annihilation (Thermalisierung) ist hier von großer Bedeutung. Dadurch legt ein Positron eine von seiner Emissionsenergie und dem Energieverlust pro Wegstrecke im durchquerten Medium abhängigen Weg zurück. Der Energieverlust ist proportional zur Dichte der Streupartner im Medium, an die die Energie der Positronen abgegeben wird. Diese sind die Hüllenelektronen der Atome des umgebenden Mediums. Daher ist der Energieverlust pro Wegstrecke abhängig von der Ordnungszahl der Atome des Mediums und von der Dichte des Mediums. Die Abbremsung findet sehr schnell statt, so daß keine Abhängigkeiten von der Strömungsgeschwindigkeit des untersuchten Mediums zu berücksichtigen ist. Aus den in der Literatur beschriebenen Modellen für die Reichweitenberechnung von Positronen über die Näherung einer kontinuierlichen Abbremsung (Continuous Slowing Down Approximation, CSDA) [ Stopping Powers for Electrons and Positrons, ICRU Report 37, International Commission on Radiation Units and Measurements, Bethesda, USA, 1984 ] folgt eine lineare Abhängigkeit der Positronenreichweite von der Massenfeuchte. Die CSDA-Näherung liefert eine von der Positronenenergie abhängige Reichweitenkonstante R, aus nach Division durch die Dichte des Mediums die Reichweite des betrachteten Positrons erhalten wird. Zusammen mit der mittleren Dichte für eine zweiphasige Strömung wird daraus ein linearer Zusammenhang zwischen der Reichweite eines einzelnen Positrons und der Massenfeuchte des Mediums wie folgt erhalten:

$$r = \left( \frac{1}{\varrho_v} - f \cdot \frac{\varrho_l - \varrho_v}{\varrho_l \cdot \varrho_v} \right) \cdot R$$

darin bedeuten :

    r = Reichweite der Positronen
    R = Reichweitenkonstante bei Energie E
    $\rho_v$ = Dichte der gasförmigen Komponente
    $\rho_1$ = Dichte der flüssigen Komponente
    f = Massenfeuchte (0 ... 1 )

Bedingt durch die physikalischen Grundlagen der Positronenerzeugung und Annihilation wird nicht die diskrete Positronenreichweite, sondern eine kontinuierliche Reichweitenverteilung gemessen. Ursache dessen ist die der Fermistatistik gehorchende kontinuierliche Verteilung der Energie der bei Betazerfällen erzeugten Positronen. Durch die Energieabhängigkeit der Reichweitenkonstante R kommt es zu einer Faltung (im mathematischen Sinne) der Reichweitenverteilung. Für die Bestimmung der Massenfeuchte aus der Reichweitenverteilung müssen daher statistische Standardmethoden herangezogen werden, die einen, eine mittlere Positronenreichweite repräsentierenden Kennwert für die untersuchte Verteilung der Reichweiten zurückliefern. Beispielhaft sei hier auf die Bestimmung des Schwerpunktes der Kurve verwiesen. Nach Kalibrierung der Abhängigkeit des Kennwertes von der Massenfeuchte ist aus dem gewonnenen Kennwert die zu ermittelnde Massenfeuchte bestimmbar.

Für die Durchführung des erfindungsgemäßen Verfahrens ist demnach die Verteilung der Punkte der Positronenbahnen an denen die Annihilation stattfindet, genau zu messen. Dazu wird die am Annihilationsort entstehende Strahlung genutzt, wobei die in der Entfernung x von der Positronenquelle gemessene γ-Strahlungsintensität möglichst genau einem eingeschränkten Raumbereich der Strömung zugeordnet wird. Hierzu wird beispielsweise die Koinzidenztechnik herangezogen, ein Standardverfahren der kernphysikalischen Meßtechnik. Bei dieser Technik werden zwei gegenüberliegende, hier zusätzlich ortsempfindliche Detektoren für γ-Strahlung verwendet, die nur dann ein Ausgangssignal liefern, wenn beide Detektoren gleichzeitig ein γ-Quant registrieren. Durch die oben dargestellte Besonderheit des Annihilationsprozesses gibt es genau dann ein Ausgangssignal (Zählimpuls), wenn eine Annihilation auf der Verbindunglinie beider Detektoren (Eventline) stattgefunden hat. Damit ist eine Zuordnung der registrierten Koinzidenzen zu einer Annihilation in einer bestimmten Entfernung x vom Positronenemitter möglich. Die erreichbare Genauigkeit ist durch die konkrete Realisierung des ortsauflösenden Detektors sowie die Qualität der vorgenommenen Kalibrierung und die Zerfallsstatistik bestimmt. Das Entstehen zufälliger und gestreuter Koinzidenzen (zufällig gleichzeitiges Eintreffen der Quanten verschiedener Annihilationsprozesse bzw. Richtungsänderung eins Quants durch Streuprozeß) ist möglich, eine Korrektur der Meßwerte ist durch die Messung verzögerter Koinzidenzen erreichbar. Das Verfahren der verzögerten Koinzidenzmessung ist ebenfalls ein Standardverfahren der kernphysikalischen Meßtechnik.

Im Sinne einer Meßbereichserweiterung können durch die Wahl der Positronenenergie (Quellenwahl) in Abhängigkeit von der Dichte des Mediums die mittleren Reichweiten der Positronen in meßtechnisch sinnvoller Größenordnung eingestellt werden.

Nachfolgend soll die Erfindung anhand eines Ausführungsbeispieles näher erläutert werden.

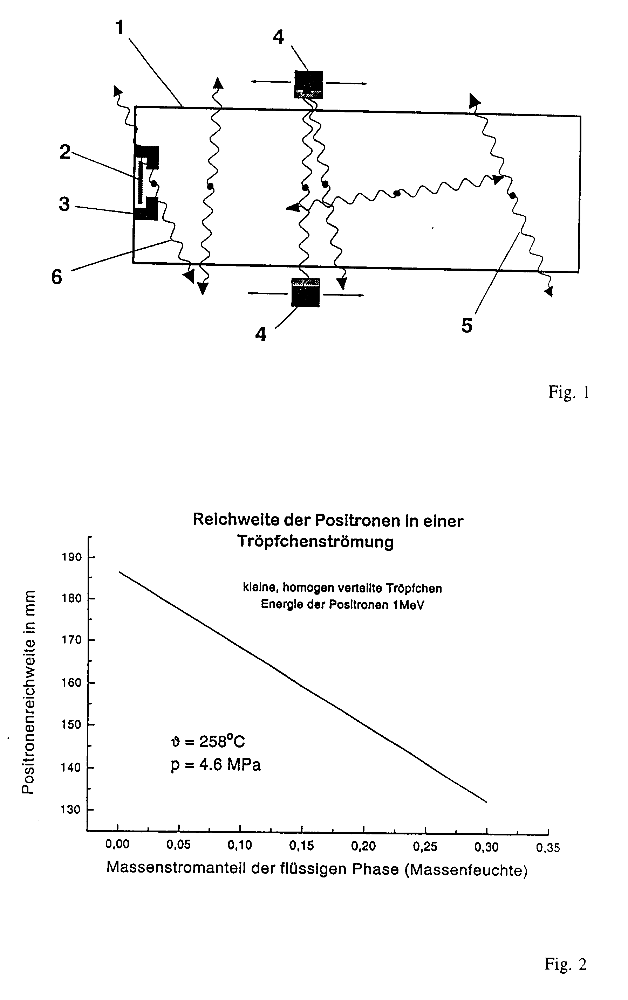

In Fig. 1 wird die prinzipielle Ausführung einer Meßanordnung zur Bestimmung der Massenfeuchte dargestellt. Dazu wird im Innern der Rohrleitung 1, in der sich die zu untersuchende Strömung befindet, eine Positronenquelle 2 befestigt. Die Halterung 3 der Quelle dient gleichzeitig als Kollimator für die Positronen, so daß diese so emittiert werden, daß sie die Wandung der Rohrleitung 1 im für die Messung interessanten Entfernungsbereich von der Quelle 2 nicht erreichen. Somit ist das außen beweglich montierte Detektorpaar 4 in der Lage, Annihilationsquanten 5, die nur aus der Strömung stammen, zu registrieren. Die Annihilationsquanten 6 aus dem Bereich der Quelle 1 und des Kollimators 3 stören den Meßprozeß aufgrund des zur Anwendung kommenden Koinzidenzprinzips nur wenig.

Andere Realisierungen wie z.B. Detektorarrays, im Innern des Rohres angeordnete Detektoren oder aus der Röntgentomographie bekannte Kollimatoranordnungen sind zur Ermittlung der Reichweitenverteilung ebenso nutzbar.

In Fig . 2 ist beispielhaft die entsprechend der o.g. Gleichung berechnete lineare Abhängigkeit der Reichweite von Positronen der Energie 1 MeV in Abhängigkeit vom Massen-stromanteil der flüssigen Phase in einer Dampfströmung mit beginnender Kondensation (Tröpfchenbildung) dargestellt.

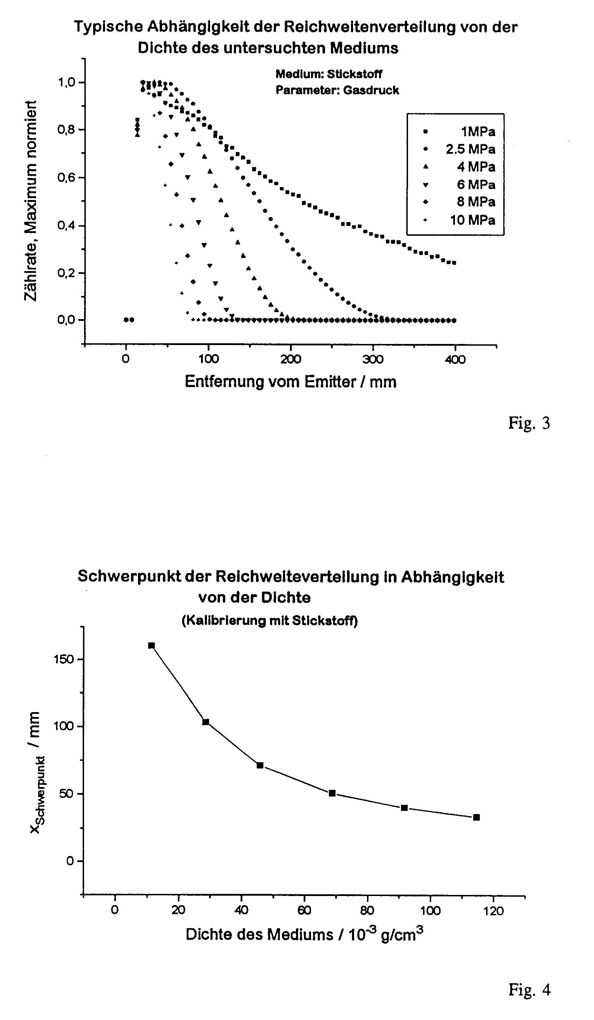

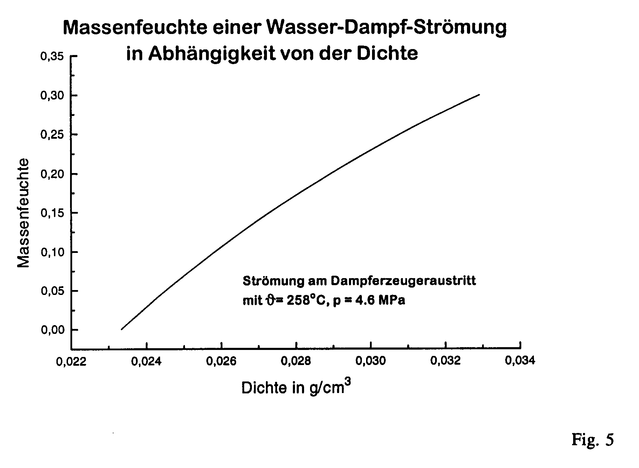

Zur Kalibrierung der Meßanordnung ist es erforderlich, zunächst für bekannte Massenfeuchten die Reichweitenverteilung aufzunehmen und daraus mit statistischen Methoden einen geeigneten Kurvenparameter zu bestimmen. Da die Einstellung einer größeren Anzahl von Strömungszuständen bekannter Massenfeuchte im allgemeinen nicht praktikabel oder undurchführbar ist, wird die Kalibrierung mit einem ähnlichen Medium durchgeführt. Als Kalibriermedium wird z.B. das Gas Stickstoff verwendet, dessen für die Positronenbremsung wesentliche Größen wie mittlere Anregungsenergie, Massen- und Ordnungszahl nur Kleine Abweichungen zu denen von Wasser aufweisen, so daß der resultierende Meßfehler gering ist. Die Dichte der Zweiphasenströmung wird über den Druck des Gases nachgebildet. Fig. 3 zeigt die bei einer solchen Kalibrierung erhaltenen Reichweiteverteilungen. Aus den gemessenen Verteilungen wird die Lage des Schwerpunktes der Verteilung der einzelnen Kurven bestimmt. Nach eintragen der Lage der Schwerpunkte über der Dichte des Mediums wird die in Fig. 4 dargestellte Kurve erhalten. Mit dieser Kurve kann kann nun aus Messungen der Reichweiteverteilung konkreter Zweiphasenströmungen die Dichte und damit entsprechend der in Fig. 5 dargestellten Abhängigkeit die Massenfeuchte der Strömung ermittelt werden.

**Patentansprüche**

1. Verfahren zur Messung der Massenfeuchte von in Rohrleitungen geführten Zweiphasenströmungen (flüssig/gasförmig) mit kleinem Massenstromanteil der flüssigen Phase (<30%), dadurch gekennzeichnet, daß Positronen in die Strömung emittiert werden und die bei der Annihilation der in die Strömung emittierten Positronen entstehende $\gamma$-Strahlung in Abhängigkeit von der Entfernung des Annihilationsortes von der Positronenquelle gemessen wird, und daß die Form der Reichweitenverteilung der Positronen zur Bestimmung der Massenfeuchte verwendet wird.

2. Verfahren nach Anspruch 1, dadurch gekennzeichnet, daß eine Positronenquelle so in der Strömung angeordnet und abgeschirmt wird, daß die in die Strömung emittierten Positronen die angrenzenden Rohrwandungen oder Einbauten nicht erreichen können.

3. Verfahren nach Anspruch 1, gekennzeichnet dadurch, daß zur Messung der $\gamma$-Strahlungsdichte ein Koinzidenzverfahren mit zwei einander gegenüberliegenden Detektoren eingesetzt wird.

Fig. 1

## Reichweite der Positronen in einer Tröpfchenströmung

kleine, homogen verteilte Tröpfchen
Energie der Positronen 1MeV

$\vartheta = 258°C$
$p = 4.6\ MPa$

Massenstromanteil der flüssigen Phase (Massenfeuchte)

Fig. 2

**Typische Abhängigkeit der Reichweitenverteilung von der Dichte des untersuchten Mediums**

Fig. 3

**Schwerpunkt der Reichweiteverteilung in Abhängigkeit von der Dichte**

(Kalibrierung mit Stickstoff)

Fig. 4

## Massenfeuchte einer Wasser-Dampf-Strömung in Abhängigkeit von der Dichte

Fig. 5

Europäisches Patentamt

**EUROPÄISCHER RECHERCHENBERICHT**

Nummer der Anmeldung

EP 95 11 0383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-4 835 390 (ELECTRIC POWER ESEARCH INSTITUTE INC) * Zusammenfassung; Abbildungen 2,3 * ----- | 1 | G01N23/00 G01N23/12 |
| | | | **RECHERCHIERTE SACHGEBIETE (Int.Cl.6)** |
| | | | G01N |

Der vorliegende Recherchenbericht wurde für alle Patentansprüche erstellt

| Recherchenort | Abschlußdatum der Recherche | Prüfer |
|---|---|---|
| DEN HAAG | 9. Oktober 1995 | Zinngrebe, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes Dokument

EPO FORM 1503 03.82 (P04C03)